# DEMANDE DE BREVET EUROPEEN

(11) **EP 1 514 715 A1**
(43) Date de publication de la demande: **16.03.2005**
(21) Numéro de dépôt: 04300564.4
(22) Date de dépôt: 31.08.2004
(51) Int. Cl.: B60J 7/22

(54) **Dispositif et procédé de réduction du battement d'un toit ouvrant de véhicule**

(30) Priorité: 15.09.2003 FR 0310798
(71) Demandeur: Renault s.a.s., 92100 Boulogne Billancourt (FR)
(72) Inventeur: Arguillat, Blandine, 75015 Paris (FR); Ricot, Denis, 78990 Elancourt (FR)

(57) **Abrégé**

Il s'agit d'un dispositif de réduction du battement d'un toit (3) ouvrant d'un véhicule automobile. Le dispositif comprend, placé sensiblement le long du bord amont de l'ouverture du toit ouvrant, des moyens à came (17) s'étendant transversalement à une direction longitudinale d'avance du véhicule et montés mobiles en rotation autour d'un axe (17a) dirigé suivant cette direction transversale (17a), par l'intermédiaire de moyens d'entraînement, pour constituer un déflecteur interférant plus ou moins avec l'écoulement de fluide gazeux le long du toit, alors que le véhicule roule, en fonction de l'angle de rotation des moyens à came.

## Description

La présente invention concerne les toits ouvrants de véhicule automobile, et plus particulièrement, un équipement pour de tels toits ouvrants, destiné à empêcher le phénomène de battement à l'intérieur de l'habitacle du véhicule.

On sait que lorsque l'écoulement d'un fluide (typiquement un gaz tel que de l'air) affleure une cavité ou ouverture, il se développe à l'interface une couche de mélange dans laquelle sont générés des oscillations et des tourbillons venant heurter le bord aval de l'ouverture.

De fortes pulsations apparaissent alors dans la cavité, lorsque la fréquence des instabilités est proche de la fréquence de résonance de cette cavité.

Dans un véhicule automobile, ce phénomène se produit fréquemment en cas d'ouverture de toit ouvrant.

On appelle communément « battement de toit ouvrant » ces pulsations de pression qui sont très gênantes, voire dangereuses, pour le conducteur et les passagers du véhicule.

On a déjà proposé d'équiper les toits ouvrants de moyens pour remédier à ce phénomène de battement.

Une solution consiste à placer un déflecteur en amont de l'ouverture, de façon à repousser l'écoulement vers le haut et provoquer le recollement de l'écoulement après le bord aval, sur le pavillon du véhicule.

Diverses variantes de ce type de solution existent, jouant notamment sur les différentes formes ou positions du déflecteur (par exemple FR-A-2 774 038 ou US-A-5 671 970).

Une autre solution propose de contrôler les pulsations par un haut-parleur délivrant un signal en opposition de phase avec la phase des pulsations, ceci en fonction de données provenant d'un microphone situé dans l'habitacle.

Dans EP-A-0 916 536, un dispositif permet de dévier périodiquement l'écoulement au dessus d'une cavité grâce notamment à des déflecteurs de formes variables, dont les oscillations sont pilotées correctement en phase, dans le sens opposé à la variation de pression dans la cavité.

FR-A-2 820 689 propose diverses méthodes pour décaler la fréquence naturelle de la couche de cisaillement du fluide gazeux en circulation alors que le véhicule roule, afin qu'elle ne coïncide pas avec la fréquence de résonance dans l'habitacle.

Plusieurs des solutions précitées ne paraissent pas appliquées, dans la pratique.

En outre, la solution de FR-A-2 774 038, actuellement appliquée, présente des difficultés de mise au point, le phénomène de battement étant très sensible à une faible variation de la position du déflecteur. Les dispersions de fabrication apportent une difficulté supplémentaire dans la définition d'une position optimale.

Le déflecteur étant placé à l'extérieur du véhicule, il est en outre soumis à des conditions climatiques diverses qui peuvent à la longue le détériorer.

De plus, étant placé dans l'écoulement extérieur du fluide gazeux, le déflecteur possède un sillage turbulent qui peut produire lui-même un bruit qui peut être gênant.

Enfin, l'esthétique du déflecteur peut également se révéler un point critique dans la définition du style d'un nouveau véhicule. Sa présence est en effet visuellement intrusive.

Les solutions de contrôle actif (DE-A-197 42 741, EP-A-O 916 536), bien qu'apparemment efficaces, sont coûteuses à mettre en oeuvre et nécessitent des moyens électroniques augmentant la complexité de fabrication du toit ouvrant.

Enfin, les solutions proposées pour modifier la fréquence de la couche de cisaillement (telle que dans FR-A-2 820 689) ne paraissent pas applicables au vu des actionneurs (moyens d'entraînement) actuels. Le battement de toit ouvrant résultant d'un couplage très fort, les actionneurs utilisés doivent être très puissants. Ainsi, les actionneurs piézoélectriques paraissent délicats à utiliser, dès lors qu'ils fournissent des déplacements faibles ; de plus, ces systèmes sont assez fragiles. Pour ce qui est du soufflage, outre sa difficulté de mise en oeuvre, il requiert une source d'air puissante qui réduit le volume de l'habitable. surmontés par une membrane souple fixée au toit et sur laquelle lesdits moyens à came agissent, pour la déformer.

Grâce à une telle coiffe souple au-dessus des moyens formant came, le système est isolé de l'extérieur, et donc étanche.

A cet égard, on conseille d'ailleurs que la cavité logeant ces moyens à came présente, en partie inférieure, un fond d'où se dressent des parois latérales dont l'extrémité supérieure définit une ouverture, laquelle est fermée par ladite membrane souple qui, périphériquement, est fixée aux parois latérales de la cavité.

Outre le dispositif dont on vient de présenter quelques caractéristiques importantes, l'invention concerne également un procédé de réduction de ce battement de toit dans lequel, en particulier, on adapte la vitesse de rotation des moyens à came pour forcer le régime oscillatoire de l'écoulement gazeux le long du toit à une fréquence différente de la fréquence de résonance de l'habitacle du véhicule.

D'autres caractéristiques et avantages de l'invention apparaîtront encore dans la description plus détaillée qui va suivre, dans laquelle :
- la figure 1 est une vue schématique de côté d'un véhicule, avec un toit ouvrant sur le pavillon,
- la figure 2 est une coupe longitudinale schématique d'une partie du pavillon, dans l'état fermé du toit ouvrant et dans l'état non opérant du dispositif de l'invention,
- la figure 3 montre une vue identique à celle de la figure 2, dans un état ouvert du toit et dans un état actif du dispositif de l'invention,
- et les figures 4, 5 et 6 montrent schématiquement en perspective, successivement, trois modes de réalisation des moyens motorisés à came de l'invention.

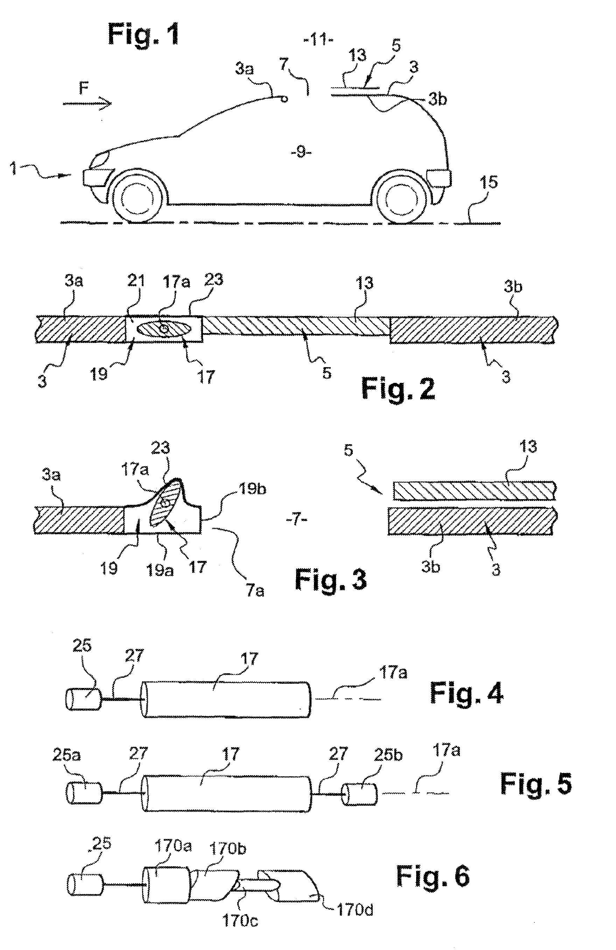

Sur la figure 1, un véhicule 1 comprend un pavillon 3 équipé d'un toit ouvrant 5, avec une ouverture 7 entre l'intérieur de l'habitacle 9 et l'environnement extérieur 11. L'ouverture 7 est fermée sélectivement par coulissement vers l'avant d'un panneau 13 monté donc mobile suivant une direction longitudinale d'avance 15 du véhicule.

Le panneau 13 est intégré entre une partie amont 3a et une partie aval 3b du pavillon, définies par rapport au sens d'avance du véhicule.

Dans l'état fermé du toit, le panneau 13 est fermé pour obturer l'ouverture en affleurant le pavillon 3 pour ne pas perturber l'écoulement.

Lorsque le véhicule est en condition normale de roulage, avec son toit ouvert, l'air de l'environnement extérieur se déplace par rapport au pavillon 3, de l'avant vers l'arrière, selon la flèche F, en formant une couche de fluide gazeux qui est pertubée à l'endroit de l'ouverture 7, ce qui est susceptible de faire apparaître dans l'habitacle le phénomène de battement expliqué avant.

Comme illustré en particulier figures 2 et 3, des moyens à came, appelés également « arbres », 17 sont disposés à proximité du bord avant (ou amont) 7a de l'ouverture 7, c'est à dire sensiblement en limite arrière de la partie amont 3a du pavillon.

Ces moyens à came s'étendent sur une partie au moins de la largeur de cette ouverture, transversalement, typiquement perpendiculairement, à la direction longitudinale 15 du véhicule, c'est-à-dire donc sur une partie de la largeur du pavillon 3 à cet endroit, suivant l'axe 17a.

Pour faciliter leur implantation dans le véhicule et leur efficacité et faible intrusivité, les moyens à came 17 sont de préférence logés dans une sorte de boîte ou cavité 19 disposés en bordure avant 7a de l'ouverture 7. Cette boîte de réception comprend un fond 19a d'où se dressent des parois latérales 19b définissant à leur extrémité supérieure une ouverture 21, ici avantageusement fermée par une membrane flexible déformable et souple 23 qui coiffe les moyens à came 17.

Le sommet de la cavité 19, et donc de la membrane souple 23, affleure de préférence la zone de toit environnante (dans l'état non actif des moyens à came 17), ne créant ainsi quasiment aucune perturbation dans l'écoulement comme le schématise la figure 3. La membrane protège aussi les moyens à came des salissures. La membrane évite aussi que des perturbations indésirables ne se créent au raccordement du pavillon et de la cavité.

Périphériquement, la membrane est fixée au bord supérieur des parois 19b, de manière à être soulevée ou déformée, élastiquement, par les moyens à came 17 sous-jacents, en fonction de l'angle de rotation qui leur est imposé.

En effet, ces moyens à came qui ont une section non circulaire sont entraînés en rotation suivant l'axe 17a par des moyens d'entraînement appropriés, tels que 25 125 ... (figures 4 à 6), de sorte qu'ils soulèvent périodiquement la membrane 23, comme le montre la figure 3 lorsque le toit est au moins partiellement ouvert par coulissement vers l'arrière du panneau 13.

Sur cette figure 3, le panneau 13 est totalement ouvert et occupe une position verrouillée au-dessus d'une partie de la zone aval 3b du pavillon, juste derrière l'ouverture 7.

Les moyens à came 17 peuvent être réalisés de différentes manières, comme le schématisent les figures 4 à 6.

Il peut tout d'abord s'agir d'un arbre unique elliptique en section, comme montré figure 4, mû en rotation suivant l'axe 17a par un moteur électrique unique 25, par l'intermédiaire d'un organe de transmission du mouvement 27.

Si l'effort à développer le nécessite, voire pour obtenir un effet de vrillage de l'arbre sur sa longueur, si sa structure, alors souple et déformable, le permet, deux moteurs 25a, 25b pourraient être prévus, un à chaque extrémité de l'arbre 17 comme sur la figure 5.

L'arbre 17 et sa motorisation sont avantageusement logés dans la cavité 19, n'interférant ainsi pas avec l'habitacle. La compacité est ainsi optimisée.

Sur la figure 6, l'arbre à came unique est remplacé par plusieurs tronçons d'arbre (quatre en l'espèce) 170a, 170b, 170c, 170d disposés coaxialement.

La came est ainsi constituée de plusieurs tronçons décalés angulairement suivant l'axe 17a, les uns par rapport aux autres, ce qui supprime ou du moins altère la cohérence transversale des structures tourbillonnaires produites dans l'écoulement dans les environs du toit ouvrant, diminuant ainsi fortement le couplage.

Un moteur 25 peut entraîner en rotation le premier tronçon d'extrémité de la chaîne, par l'intermédiaire de l'organe de transmission du mouvement (rotation), 27, et des organes complémentaires (non représentés) transmettant ce mouvement entre les tronçons d'arbre 170b, 170c ... de la chaîne.

Comme montré sur la figure, les tronçons d'arbre peuvent avoir des calages angulaires différents, par exemple pour tenir compte de la forme du pavillon et adapter la réduction de l'effet de battement de toit au mieux, en fonction du véhicule concerné.

Dans le cas de la figure 5, l'arbre pourrait d'ailleurs être adapté pour être vrillé autour de son axe de rotation 17a, dans le même but, chaque moteur d'extrémité 25a, 25b pouvant entraîner cet arbre en rotation à des vitesses différentes, au moins dans certaines configurations.

Lorsque le panneau 13 de toit est ouvert, le(s) moteur(s) est (sont) mis en fonctionnement pour faire tourner l'arbre à came autour de son axe 17a, de sorte que ce dernier vient périodiquement créer des oscillations dans la couche limite de l'écoulement gazeux, le long du pavillon.

L'utilisation de la membrane élastiquement déformable permet d'affiner l'effet.

Via la motorisation, on peut en outre adapter la vitesse de rotation des moyens à came pour forcer le régime oscillatoire de l'écoulement gazeux le long, ou dans l'environnement, du toit ouvrant à une fréquence différente de la fréquence de résonance de l'habitacle 9.

En forçant ainsi l'oscillation de cet écoulement, on évite le couplage dont on a déjà parlé.

Bien qu'on ne l'ait pas évoqué, on doit par ailleurs comprendre que sur le véhicule 1 sont embarqués des moyens de commande et de contrôle pour entraîner automatiquement (par exemple dès que le toit ouvrant est au moins en partie ouvert) ou à la requête de l'utilisateur du véhicule, le déclenchement de rotation de l'arbre à came 17. Un système à capteur(s), interrupteur(s) et électronique associée sera prévu, dans une approche automatisée.

## Revendications

1. Dispositif de réduction du battement d'un toit (3) ouvrant d'un véhicule automobile, **caractérisé en ce qu'**il comprend, placé sensiblement le long du bord amont (7a) de l'ouverture (7) du toit ouvrant, des moyens à came (17) s'étendant transversalement à une direction longitudinale (15) d'avance du véhicule et montés mobiles en rotation autour d'un axe (17a) dirigé suivant cette direction transversale (17a), par l'intermédiaire de moyens d'entraînement (25, 27), pour constituer un déflecteur interférant plus ou moins avec l'écoulement de fluide gazeux le long du toit, alors que le véhicule roule, en fonction de l'angle de rotation des moyens à came.

2. Dispositif selon la revendication 1, **caractérisé en ce que** les moyens à came (17) sont surmontés par une membrane souple (23) fixée au toit (3) et sur laquelle lesdits moyens à came agissent, pour la déformer.

3. Dispositif selon la revendication 1 ou la revendication 2, **caractérisé en ce que** les moyens à came (17) sont logés dans une cavité (19) s'étendant le long du bord avant de l'ouverture (7), en un endroit non recouvert par le panneau mobile de toit (13) qui définit le toit ouvrant en recouvrant ou en dégageant cette ouverture.

4. Dispositif selon la revendication 2 et la revendication 3, **caractérisé en ce que** la cavité présente, en partie inférieure, un fond (19a) d'où se dressent des parois latérales (19b) dont l'extrémité supérieure définit une ouverture (21), laquelle est fermée par ladite membrane souple (23) qui, périphériquement, est fixée auxdites parois latérales (19b) de la cavité.

5. Dispositif selon l'une quelconque des revendications précédentes, **caractérisé en ce que** les moyens à came (17) comprennent au moins un arbre de section non circulaire s'étendant sur une partie au moins de la largeur du toit, suivant ladite direction transversale (17a).

6. Dispositif selon la revendication 5, **caractérisé en ce que** l'arbre présente, suivant ladite direction transversale, deux extrémités opposées reliées chacune à un moteur (25a, 25b) d'entraînement en rotation de l'arbre (17).

7. Dispositif selon les revendications 5 ou 6, **caractérisé en ce que** les moyens à came comprennent plusieurs dits arbres (170a, 170b...)de section non circulaire reliés entre eux par des moyens de transmission du mouvement de rotation, ces arbres définissant une chaîne d'arbres.

8. Dispositif selon l'une quelconque des revendications 3 et 5, **caractérisé en ce que** les moyens à came comprennent un arbre unique (17) de section non circulaire, s'étendant sur une partie au moins de la largeur du toit (3), suivant ledit axe transversal (17a), cet arbre étant relié à une extrémité à un moteur électrique (25) d'entraînement en rotation également disposé à l'intérieur de la cavité (21).

9. Procédé de réduction du battement du toit ouvrant d'un véhicule automobile, **caractérisé en ce qu'**on crée périodiquement des oscillations dans la couche de l'écoulement gazeux qui existe le long du toit lorsque le véhicule roule, en équipant ce véhicule de moyens à came (17) s'étendant transversalement à la direction longitudinale (15) d'avance du véhicule, à proximité du bord amont de l'ouverture (7) du toit ouvrant, et qui sont montés mobiles en rotation autour d'un axe (17a) s'étendant suivant cette direction transversale et en mettant en rotation ces moyens à came, suivant cet axe.

10. Procédé selon la revendication 9, **caractérisé en ce qu'**on adapte la vitesse de rotation des moyens à came (17) pour forcer le régime oscillatoire de l'écoulement gazeux le long du toit à une fréquence différente de la fréquence de résonance de l'habitacle (9) du véhicule.

11. Procédé selon la revendication 9 ou la revendication 10, **caractérisé en ce qu'**on recouvre les moyens à came par une membrane déformable (23) que l'on place en contact avec fécoulement gazeux le long du toit et que la rotation des moyens à came (17) fait se soulever périodiquement.
